# EUROPEAN PATENT SPECIFICATION

(11) **EP 3 597 981 B1**
(45) Date of publication and mention of the grant of the patent: **07.04.2021**
(21) Application number: 19186372.9
(22) Date of filing: 15.07.2019
(51) Int. Cl.: F16L 41/14, E03F 3/04, E03F 5/02, F16L 41/00

(54) **JOINT FOR THE CONNECTION OF A SECONDARY DUCT TO A MAIN DUCT**
VERBINDUNG ZUM VERBINDEN EINES SEKUNDÄRKANALS MIT EINEM HAUPTKANAL
JOINT POUR LA CONNEXION D'UN CONDUIT SECONDAIRE À UN TUYAU PRINCIPAL

(30) Priority: 16.07.2018 IT 201800007209
(43) Date of publication of application: 22.01.2020
(73) Proprietor: REDI S.p.A., 40069 Zola Predosa (BO) (IT)
(72) Inventor: CIONI, Moreno, 40069 Zola Predosa (BO) (IT); GIORGIO, Massimiliano, 40069 Zola Predosa (BO) (IT); RICCELLI, Fabio, 40050 Monte San Pietro (BO) (IT)
(74) Representative: Modiano, Micaela Nadia

(56) References cited:
- DE-A1-102008 000 049
- KR-A- 20100 027 369
- US-A1- 2012 080 879

## Description

The present invention relates to a joint for the connection of a secondary duct to a main duct, mainly indicated for use in sewage pipelines and/or hydraulic pipelines for civil and/or industrial use.

Main sewage ducts are usually provided with mutually interlocked tubular elements made of reinforced concrete and have the purpose of conveying wastewater toward purification plants or to adapted dispersion water networks.

The main sewage ducts constitute a manifold for all drain pipes of the buildings present in the region. Upon provision of the main sewage duct, all the secondary ducts are connected thereto (during construction).

During the operation of the sewage duct it may be necessary to connect new secondary pipes (for example following the construction of new buildings or for the extension of the sewer network of existing buildings).

These connections are generally obtained by means of joints made of a material such as plastic, which are securely fixed in a hole formed on the surface of the main duct (by screw clamping or following the arrangement of layers of structural material having the function of welding the joint and the duct). The secondary piping which has the function is fixed to the opposite end of the joint.

The connection of a secondary pipe to the main duct must meet various conditions: in particular, it can be necessary to force the flow coming from the secondary piping to be introduced in the same direction as the main duct (in order to avoid the triggering of excessive turbulences and to prevent the fluid present in the main duct from being able to rise back up the secondary piping). The case in which it is necessary to ensure that the secondary piping maintains its own direction, without using curved or elbow connections that might create problems in terms of correct conveyance of the fluid flow in the terminal part of the secondary piping should also not be excluded: in fact, a bend or a right angle of the piping might slow down the flow and reduce the efficiency of said piping.

Connection joints of the known type, if the two ducts are mutually inclined, force complicated processes and the use of numerous additional components in order to allow direction changes between the terminal portion of the secondary duct and the coupling in the main duct.

A prior art connection joint is known from KR 2010 0027369 A. Z For this reason, installation times are also often long and the corresponding operations are complex.

The aim of the present invention is to solve the problems described above, devising a joint for the connection of a secondary duct to a main duct that reduces the increase in vortical motion in the main duct at the input of the flow that arrives from the secondary duct.

Within this aim, an object of the invention is to devise a joint for the connection of a secondary duct to a main duct that allows to maintain maximum conveyance efficiency of the secondary duct up to the introduction of the flow conveyed thereby in the main duct.

Another object of the invention is to propose a joint for the connection of a secondary duct to a main duct which allows fast and easy connection operations also at the connection of mutually inclined ducts, even oblique ones.

A further object of the present invention is to provide a joint for the connection of a secondary duct to a main duct that has low costs, is relatively easy to provide and is safe in application.

This aim and these and other objects that will become better apparent hereinafter are achieved by a joint for the connection of a secondary duct to a main duct provided with a cutout having predefined shape and dimensions, said secondary duct being inclined with respect to said main duct, characterized in that it comprises
- a tubular element provided with a first thread on a first external portion thereof and with a second thread on a second internal portion thereof;
- at least one ring provided with an internal thread which is complementary to said first external thread of said tubular element, said ring allowing its screwing onto said first external thread of said tubular element;
- at least one first shell whose shape and dimensions are complementary and exceed those of said cutout for its easy insertion within said main duct through said cutout and its arrangement so as to overlap said cutout, with consequent complete occlusion of said cutout, with a perimetric border thereof in abutment against the internal surface of said main duct at the edge of said cutout, said second shell comprising an inclined tubular channel provided with an external thread which is complementary to said second thread of said tubular element for the coupling of said element to said channel following mutual screw coupling;
- at least one second shell whose shape is substantially complementary to the shape of the external surface of said duct and whose dimensions exceed the dimensions of said cutout, said second shell being provided with an inclined tubular body suitable for the accommodation of said tubular element and of said channel;
the clamping of said ring on said first thread, with said ring in abutment against the terminal front of said inclined tubular body of said second shell, causing the clamping of the edge of said cutout between corresponding perimetric borders of said first shell and of said second shell.

Further characteristics and advantages of the invention will become better apparent from the description of a preferred but not exclusive embodiment of the joint for the connection of a secondary duct to a main duct according to the invention, illustrated by way of non-limiting example in the accompanying drawings, wherein:

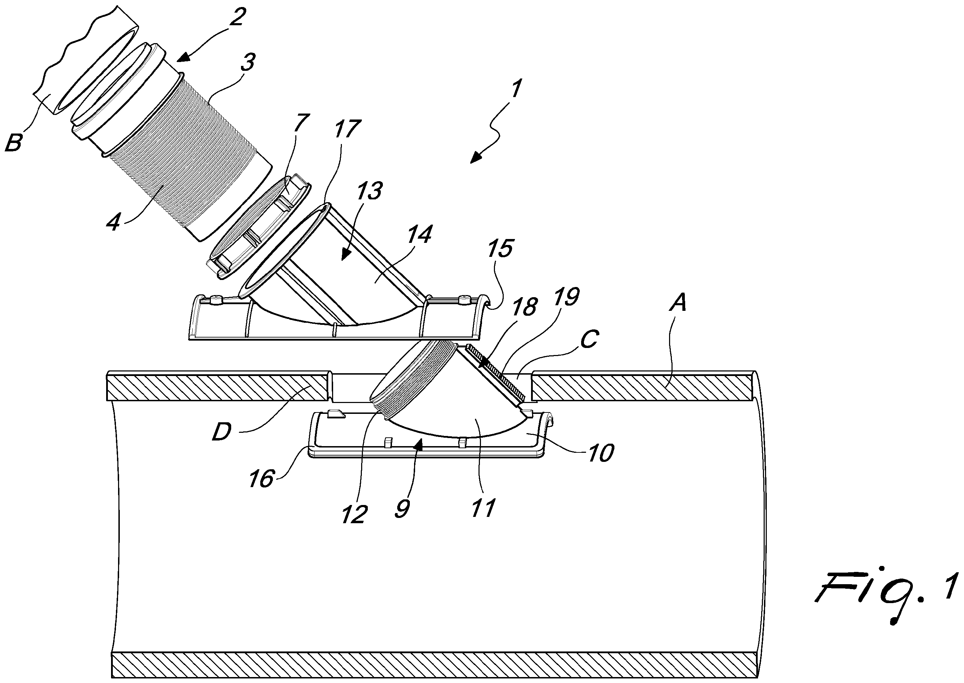

Figure 1 is a perspective exploded view of a joint for the connection of a secondary duct to a main duct according to the invention and of the respective installation main duct;

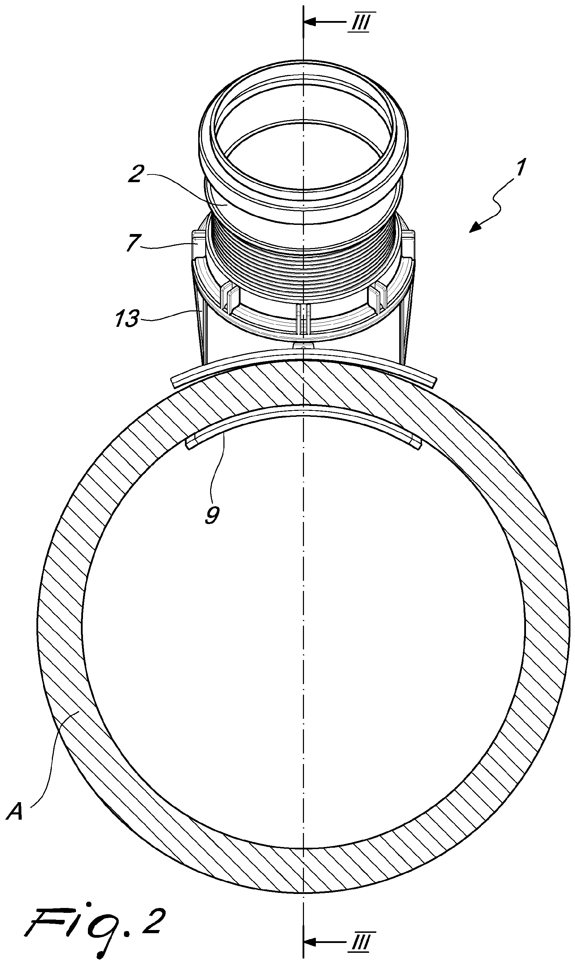

Figure 2 is a front view of the joint of Figure 1 installed in the respective main duct;

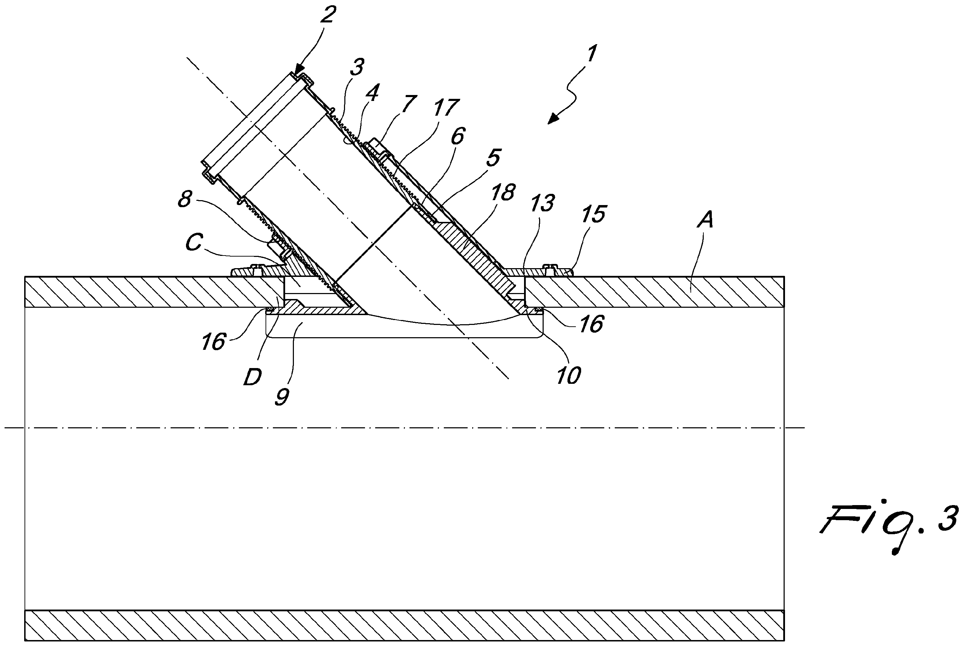

Figure 3 is a sectional view, taken along the plane III-III shown in Figure 2;

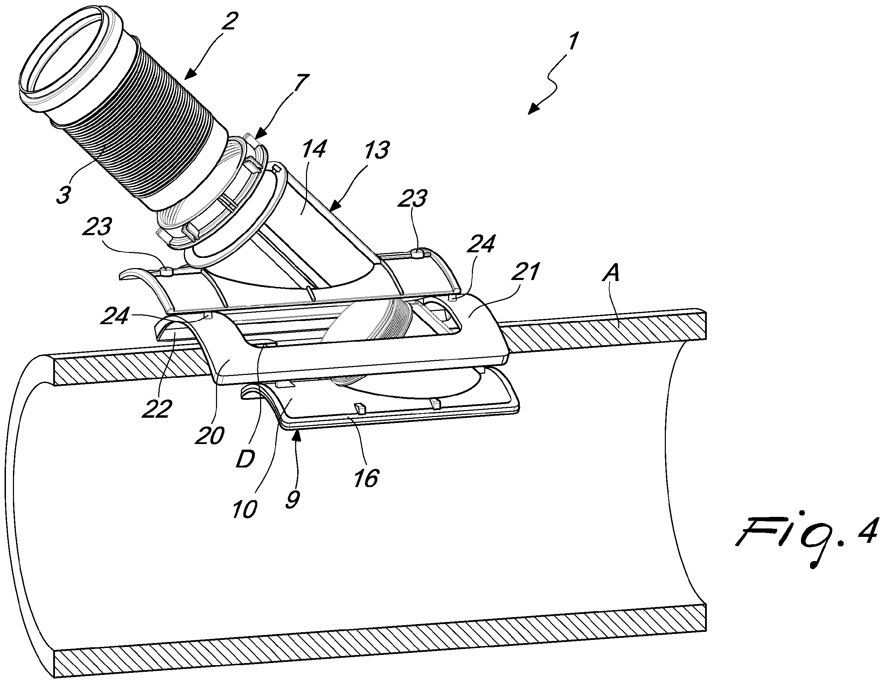

Figure 4 is a perspective exploded view of a joint for the connection of a secondary duct to a main duct provided with an adapter for coupling to a respective installation main duct.

With reference to the figures, a joint for the connection of a secondary duct B to a main duct A is generally designated by the reference numeral 1.

The main duct (A) shall be provided with a cutout (C) of predefined shape and dimensions which shall be provided by the installers in the steps prior to the assembly of the joint 1.

The secondary duct B shall be inclined with respect to the main duct A.

The joint 1 according to the invention comprises a tubular element 2 provided with a first thread 3 on a first external portion thereof 4 and with a second thread 5 on a second internal portion 6 thereof.

The portion 4 is formed at the intermediate region of the tubular element 2 and the first thread 3 may extend for a large part of the longitudinal extension of the element 2, except for the two terminal parts (one designed to couple with the duct B and the other comprising the internal portion 6).

The internal portion 6 shall comprise the thread 5 on the internal face of the element 2, for a length limited to a first portion that is contiguous to the head that is opposite the one designed to be coupled to the secondary duct B.

The joint 1 further comprises at least one ring 7 provided with an internal thread 8 which is complementary to the first external thread 3 of the tubular element 2.

The ring 7 can be thus validly screwed onto the first external thread 3 of the tubular element 2: the installation and fastening methods thereof will be described hereinafter, as a function of the assembly of the joint 1.

Furthermore, it should be noted that the joint 1 according to the invention comprises at least one first shell 9 whose shape and dimensions are complementary and exceed those of the cutout C, for its easy insertion within the main duct A indeed through the cutout C and its arrangement so as to overlap said cutout C, with consequent complete occlusion thereof.

A perimetric border 10 thereof of the first shell 9, with the joint 1 installed, shall abut against the internal surface of the main duct A at the edge D of the cutout C.

The second shell 9 shall be furthermore provided advantageously with an inclined tubular channel 11 provided with an external thread 12.

The external thread 12 will be positively complementary to the second thread 5 of the tubular element 2 for the coupling of the element 2 to said channel 11, obtained by mutual screw coupling.

The joint 1 further comprises at least one second shell 13, which has a shape that is substantially complementary to the shape of the external surface of the duct A and whose dimensions exceed the dimensions of the cutout C.

The second shell 13 also shall be effectively provided with an inclined tubular body 14 suitable for the accommodation of the tubular element 2 and of the channel 11.

Once the first shell 9 has been inserted in the main duct A through the cutout C, it shall thus be possible to proceed to couple the second shell 13 to the main duct A, accommodating the tubular channel 11 within the tubular body 14. Then the tubular element 2 shall be inserted in the tubular body 14 until its portion 6 shall contact the terminal front of the channel 11 and the element 2 shall be screwed onto the channel so that the second thread 5 engages the corresponding external thread 12 of the first shell 9.

At this point, the ring 7 (already previously screwed onto the first thread 3) can be clamped, placing under traction the element 2, which will drag the second shell 9 (to which it is rigidly coupled by virtue of the screw coupling of the second thread 5 on the external thread 12).

The clamping of the ring 7 on the first thread 3, when the ring 7 is in abutment against the terminal front of the inclined tubular body 14 of the second shell 13, shall cause advantageously the clamping of the edge D of the cutout C between corresponding perimetric borders 10 and 15 of the first shell 9 and of the second shell 13, respectively.

With particular reference to a constructive solution of undeniable interest in application, the joint 1 according to the invention can favorably comprise, interposed between the perimetric border 10 of the first shell 9 and the corresponding internal face of the edge D of the cutout C, a sealing gasket 16 for sealing the main duct A upon complete installation of the joint 1.

In the accompanying figures, the gasket 16 is shown rigidly coupled to the perimetric border 10, although the possibility is not excluded to provide it separately therefrom so that it is manually positioned by the installation worker with the best configuration.

Furthermore, it is useful to specify that the second shell 13 can advantageously comprise a longitudinal slot 17, while the first shell 9 can conveniently comprise a ridge 18 whose shape and dimensions are complementary to those of the slot 17.

In the complete installation configuration, the ridge 18 shall be accommodated within the slot 17, ensuring the correct alignment of the components.

It is specified that, with reference to a constructive variation that is particularly convenient and easy to install, the ridge 18 and the slot 17 may usefully comprise mutual coupling means such as sets of teeth 19, sequences of protrusions and recesses, deformable elastic units, and the like. Said mutual coupling means shall have the purpose of preventing the extraction of the first shell 9 during the assembly and installation of the joint 1.

In practice, it will be sufficient to insert the first shell 9 in the main duct A and arrange it in the correct arrangement; the second shell 13 shall then be arranged adjacent, so that the channel 11 enters the tubular body 14: in this step, the ridge 18 shall enter the slot 17. By virtue of the mutual coupling means, the accidental extraction of the ridge 18 from the slot 17 (which would cause the fall of the first shell 9 onto the bottom of the main duct A) shall be avoided: in particular, if there are sets of teeth 19, a mutual engagement of the teeth shall occur which will cause a mutual shape mating that will hinder accidental extraction.

Furthermore, it is specified that the joint 1 according to the invention can comprise furthermore at least one adapter 20, which is interposed between the second shell 13 and the external surface of the edge D of the cutout C.

The adapter 20 will be validly provided with a convex face 21, whose shape and dimensions are complementary to those of the concave surface of the second shell 13 (the one directed toward the main duct A in the installation configuration), and with a concave face 22, whose shape and dimensions are complementary to those of the external surface of the main duct A.

The different radius of curvature of the concave face 22 and the convex face 21 of each adapter 20 associated with a second shell 13 shall allow the stable coupling of said second shell 13 to main ducts A having various different diameters.

In practice, the radius of curvature of the concave face 22 shall be similar to the external radius of the main duct A for which the adapter 20 is designed, while the radius of curvature of the concave surface 21 shall be similar to the radius of curvature of the concave surface of the second shell 13.

In this case, methods for adapting the first shell 9 to the internal surface of the main duct A (having a different diameter than the predefined one) shall also be provided: in particular, the possibility is provided to provide shells 9 having a different format or constituted by a partially deformable material (which can thus adapt to the different curvature of the internal surface of the duct A); the possibility is not excluded, in any case, to adopt appropriate optional components to be interposed between the shell 9 and the duct A, and likewise provisions are made right now for the possibility to provide a gasket 16 of high thickness that can ensure the perfect adaptation of the shell 9 to different diameters of the duct A.

By virtue of the use of specific adapters 20 it shall thus be possible to use the same joint 1 according to the invention also on main ducts A having a different outer diameter.

It is specified that with reference to the constructive hypothesis just described, the second shell 13 may advantageously comprise means for coupling to at least one respective adapter 20, which will be preferably chosen from screws 23 and holes 24 for their accommodation, elastic couplings and respective seats, prongs and corresponding shaped holes, and the like.

In this manner, the second shell 13 may be coupled beforehand to the respective adapter 20, facilitating the following installation of the joint 1 in the main duct A.

In order to define the characteristics of geometric orientation of the joint according to the invention, it is specified that the tubular channel 11 and the tubular body 13, in the configuration of complete installation of the joint 1, are coaxial and their axis, which substantially coincides with the axis of secondary duct B, has an inclination, with respect to the axis of the main duct A, comprised between 5° and 85°.

Obviously, the best results in terms of effectiveness and convenience of use can be identified at inclination values comprised between a minimum of 15°/20° and a maximum of 70°/75°. The adoption of different inclinations, however, is not excluded.

In any case, the axis of the secondary duct B and the axis of the main duct A may be equally coplanar (and thus said axes shall be mutually incident) or oblique, while being within the scope of the protection defined by the present invention.

On a strictly constructive level, it is specified that each component chosen among the tubular element 2, the first shell 9, the second shell 13, the ring 7 and the adapters 20 shall be conveniently made of a material chosen preferably among polyvinyl chloride (PVC), polypropylene (PP), polyethylene (PE), polyamide (PA), polyurethane (PU), polytetrafluoroethylene (PTFE), polyethylene terephthalate (PET), a fluoropolymer, composite material reinforced with glass fibers, composite material reinforced with carbon fibers, composite material reinforced with Kevlar fibers, composite material reinforced with polymeric fibers, composite material reinforced with natural fibers, and combinations thereof.

The selection of a specific material or of a specific combination of materials shall depend on the particular type of installation, on the environmental conditions and on the presence of corrosive, aggressive or oxidizing agents, if any.

Advantageously, the present invention solves the problems described above, proposing a joint 1 for the connection of a secondary duct B to a main duct A that reduces the increase in vortical motion in the main duct A at the intake of the flow that arrives from the secondary duct B.

Advantageously, the joint 1 according to the invention allows to maintain maximum efficiency of conveyance of the secondary duct B up to the introduction of the flow conveyed by it into the main duct A.

Conveniently, the joint 1 according to the invention allows fast and easy connection operations also at the connection of mutually inclined ducts A, B, including the case in which they are mutually oblique.

Validly, the joint 1 for the connection of a secondary duct B to a main duct A is relatively easy to provide in practice and has low costs: these characteristics make the joint 1 according to the invention an innovation with assured application.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

This application claims priority from Italian Patent Application No. 102018000007209.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A joint for the connection of a secondary duct (B) to a main duct (A) provided with a cutout (C) having predefined shape and dimensions, said secondary duct (B) being inclined with respect to said main duct (A), the joint comprises
- a tubular element (2) provided with a first thread (3) on a first external portion thereof (4) and with a second thread (5) on a second internal portion (6) thereof;
- at least one ring (7) provided with an internal thread (8) which is complementary to said first external thread (3) of said tubular element (2), said ring (7) allowing its screwing onto said first external thread (3) of said tubular element (2);
- at least one first shell (9) whose shape and dimensions are adapted to be complementary and exceed those of said cutout (C) for its easy insertion within said main duct (A) through said cutout (C) and its arrangement so as to overlap said cutout (C), with consequent complete occlusion of said cutout (C), with a perimetric border thereof (10) adapted to be in abutment against the internal surface of said main duct (A) at the edge (D) of said cutout (C), said first shell (9) comprising an inclined tubular channel (11) provided with an external thread (12) which is complementary to said second thread (5) of said tubular element (2) for the coupling of said element (2) to said channel (11) following mutual screw coupling;
- at least one second shell (13) whose shape is adapted to be substantially complementary to the shape of the external surface of said duct (A) and whose dimensions exceed the dimensions of said cutout (C), said second shell (13) being provided with an inclined tubular body (14) suitable for the accommodation of said tubular element (2) and of said channel (11);
the clamping of said ring (7) on said first thread (3), with said ring (7) in abutment against the terminal front of said inclined tubular body (14) of said second shell (13), causing in use the clamping of the edge (D) of said cutout (C) between corresponding perimetric borders (10, 15) of said first shell (9) and of said second shell (13).

2. The joint according to claim 1, **characterized in that** it comprises, interposed between said perimetric border (10) of said first shell (9) and the corresponding internal face of said edge (D) of said cutout (C), a sealing gasket (16) for sealing said main duct (A) upon complete installation of said joint (1).

3. The joint according to claim 1, **characterized in that** said second shell (13) comprises a longitudinal slot (17) and said first shell (9) comprises a ridge (18) whose shape and dimensions are complementary to said slot (17), in the fully installed configuration said ridge (18) being accommodated within said slot (17).

4. The joint according to claim 3, **characterized in that** said ridge (18) and said slot (17) comprise mutual coupling means such as sets of teeth (19), sequences of protrusions and recesses, deformable elastic units and the like, in order to prevent the extraction of said ridge (18) from said slot (17) during the assembly and installation of said joint (1).

5. The joint according to claim 1, **characterized in that** it comprises at least one adapter (20), which is interposed between said second shell (13) and the external surface of said edge (D) of said cutout (C), said adapter (20) being provided with a convex face (21) whose shape and dimensions are complementary to those of the concave surface of said second shell (13) and with a concave face (22) whose shape and dimensions are complementary to those of the external surface of said main duct (A), the different radius of curvature of said concave face (22) and said convex face (21) of each adapter (20) associated with a said second shell (13) allowing the stable coupling of said second shell (13) with main ducts (A) having various different diameters.

6. The joint according to claim 5, **characterized in that** said second shell (13) comprises means for coupling to at least one respective adapter (20), said coupling means being preferably chosen among screws (23) and holes (24) for their accommodation, elastic couplings and respective seats, prongs and corresponding shaped holes, and the like.

7. The joint according to one or more of the preceding claims, **characterized in that** said tubular channel (14) and said tubular body (2), in the configuration of complete installation of said joint, are coaxial and their axis, which substantially coincides with the axis of said secondary duct (B), has an inclination, with respect to the axis of the main duct (A), comprised between 5° and 85°.

8. The joint according to claim 7, **characterized in that** said axis of said secondary duct (B) and said axis of said main duct (A) are coplanar.

9. The joint according to claim 7, **characterized in that** said axis of said secondary duct (B) and said axis of said main duct (A) are oblique.

10. The joint according to one or more of the preceding claims, **characterized in that** each component chosen among said tubular element (2), said first shell (9), said second shell (13), said ring (7) and said adapters (20) is made of a material chosen preferably among polyvinyl chloride (PVC), polypropylene (PP), polyethylene (PE), polyamide (PA), polyurethane (PU), polytetrafluoroethylene (PTFE), polyethylene terephthalate (PET), a fluoropolymer, composite material reinforced with glass fibers, composite material reinforced with carbon fibers, composite material reinforced with Kevlar fibers, composite material reinforced with polymeric fibers, composite material reinforced with natural fibers, and combinations thereof.

## Patentansprüche

1. Eine Verbindung zum Verbinden eines Sekundärkanals (B) mit einem Hauptkanal (A) der mit einer Aussparung (C) versehen ist, die eine vordefinierte Form und Abmessungen hat, wobei der Sekundärkanal (B) im Verhältnis zu dem Hauptkanal (A) geneigt ist, wobei die Verbindung Folgendes umfasst:
- ein rohrförmiges Element (2) ausgestattet mit einem ersten Gewinde (3) an einem ersten äußeren Abschnitt (4) davon und mit einem zweiten Gewinde (5) an einem zweiten inneren Abschnitt (6) davon;
- mindestens einen Ring (7) versehen mit einem Innengewinde (8), das komplementär zu dem ersten Außengewinde (3) des rohrförmigen Elements (2) ist, wobei der Ring (7) sein Aufschrauben auf das erste Außengewinde (3) des rohrförmigen Elements (2) ermöglicht;
- mindestens ein erstes Gehäuse (9) dessen Form und Abmessungen abgebildet sind, um komplementär zu denjenigen der Aussparung (C) zu sein und sie zu überschreiten zum Zwecke seines einfachen Einsetzens in den Hauptkanal (A) durch die Aussparung (C) und seiner Anordnung, um die Aussparung (C) zu überlappen mit daraus folgender vollständiger Belegung der Aussparung (C), wobei ein Umfangsrad (10) davon ausgebildet ist, um an der Innenfläche des Hauptkanals (A) am Rand (D) der Aussparung (C) anzuliegen, wobei das erste Gehäuse (9) einen schrägen rohrförmigen Kanal (11) umfasst, der mit einem Außengewinde (12) ausgestattet ist, welches komplementär zu dem zweiten Gewinde (5) des rohrförmigen Elements (2) ist zum Koppeln des Elements (2) mit dem Kanal (11) nach gegenseitiger Verschraubung;
- mindestens ein zweites Gehäuse (13) dessen Form ausgebildet ist, um im Wesentlichen komplementär zur Form der äußeren Oberfläche des Kanals (A) zu sein und dessen Abmessungen die Abmessungen der Aussparung (C) überschreiten, wobei das zweite Gehäuse (13) mit einem schrägen rohrförmigen Körper (14) ausgestattet ist, der für die Aufnahme des rohrförmigen Elements (2) und des Kanals (11) geeignet ist;
wobei das Festklemmen des Rings (7) an dem ersten Gewinde (3) wobei der Ring (7) an der Endfront des schrägen rohrförmigen Körpers (14) des zweiten Gehäuses (13) anliegt im Gebrauch das Einklemmen des Randes (D) der Aussparung (C) zwischen entsprechenden Umfangsrändern (10, 15) des ersten Gehäuses (9) und des zweiten Gehäuses (13) auslöst.

2. Die Verbindung gemäß Anspruch 1, **dadurch gekennzeichnet, dass** sie zwischen dem Umfangsrand (10) des ersten Gehäuses (9) und der entsprechenden Innenseite des Randes (D) der Aussparung (C) eine Dichtung (16) zum Abdichten des Hauptkanals (A) nach vollständiger Installation der Verbindung (1) umfasst.

3. Die Verbindung gemäß Anspruch 1, **dadurch gekennzeichnet, dass** das zweite Gehäuse (13) einen Längsschlitz (17) umfasst und das erste Gehäuse (9) einen Grad (18) umfasst, dessen Form und Abmessungen komplementär zu dem Schlitz (17) sind, wobei in der vollständig montierten Konfiguration der Grad (18) in den Schlitz (17) aufgenommen ist.

4. Die Verbindung gemäß Anspruch 3, **dadurch gekennzeichnet, dass** der Grad (18) und der Schlitz (17) Mittel zur gegenseitigen Kopplung umfassen, wie zum Beispiel Zahnreihen (19), Folgen von Vorsprüngen und Vertiefungen, verformbare elastische Einheiten und dergleichen um das Herausziehen des Grads (18) aus dem Schlitz (17) während der Montage und Installation der Verbindung (1) zu verhindern.

5. Die Verbindung gemäß Anspruch 1, **dadurch gekennzeichnet, dass** sie mindestens ein Übergangsstück (20) umfasst, das zwischen das zweite Gehäuse (13) und die äußere Oberfläche des Randes (D) der Aussparung (C) angeordnet ist, wobei das Übergangsstück (20) mit einer konvexen Seite (21) ausgestattet ist, deren Form und Abmessungen komplementär zu denjenigen der konkaven Oberfläche des zweiten Gehäuses (13) sind und mit einer konkaven Seite (22) deren Form und Abmessungen komplementär zu denjenigen der äußeren Oberfläche des Hauptkanals (A) sind, wobei die verschiedenen Krümmungsradien der konkaven Seite (22) und der konvexen Seite (21) jedes Übergangsstück (20) das mit dem zweiten Gehäuse (13) verbunden ist, die feste Kopplung des zweiten Gehäuses (13) mit Hauptkanälen (A) ermöglicht, die verschiedene Durchmesser haben.

6. Die Verbindung gemäß Anspruch 5, **dadurch gekennzeichnet, dass** das zweite Gehäuse (13) Mittel zur Kopplung mit mindestens einem entsprechenden Übergangsstück (20) umfasst, wobei die Kopplungsmittel vorzugsweise gewählt sind aus Schrauben (23) und Bohrungen (24) zu ihrer Aufnahme, elastischen Kopplungen und entsprechenden Sitzen, Gabeln und entsprechenden geformten Löchern und dergleichen.

7. Die Verbindung gemäß einem oder mehreren der obigen Ansprüche, **dadurch gekennzeichnet, dass** der rohrförmige Kanal (14) und der rohrförmige Körper (2) in der Konfiguration vollständiger Installation der Verbindung koaxial sind und ihre Achse, die im Wesentlichen mit der Achse des Sekundärkanals (B) zusammenfällt eine Neigung im Verhältnis zur Achse des Hauptkanals (A) hat, die zwischen 5° und 85° beträgt.

8. Die Verbindung gemäß Anspruch 7, **dadurch gekennzeichnet, dass** die Achse des Sekundärkanals (B) und die Achse des Hauptkanals (A) koplanar sind.

9. Die Verbindung gemäß Anspruch 7, **dadurch gekennzeichnet, dass** die Achse des Sekundärkanals (B) und die Achse des Hauptkanals (A) schräg sind.

10. Die Verbindung gemäß einem oder mehreren der obigen Ansprüche, **dadurch gekennzeichnet, dass** jede Komponente die gewählt ist aus dem rohrförmigen Element (2), dem ersten Gehäuse (9), dem zweiten Gehäuse (13), dem Ring (7) und den Übergangsstücken (20) aus einem Material besteht, das vorzugsweise gewählt ist aus Polyvinylchlorid (PVC), Polypropylen (PP), Polyethylen (PE), Polyamid (PA), Polyurethan (PU), Polytetrafluorethylen (PTFE), Polyethylenterephthalat (PET), einem Fluorpolymer, Verbundmaterial das mit Glasfasern verstärkt ist, Verbundmaterial das mit Carbonfasern verstärkt ist, Verbundmaterial, das mit Kevlar-Fasern verstärkt ist, Verbundmaterial, das mit Polymerfasern verstärkt ist, Verbundmaterial, das mit Naturfasern verstärkt ist und Kombination davon.

## Revendications

1. Jonction pour le raccordement d'une conduite secondaire (B) à une conduite principale (A), pourvu d'une découpe (C) ayant une forme et des dimensions prédéfinies, ladite conduite secondaire (B) étant inclinée par rapport à ladite conduite principale (A), la jonction comportant :
- un élément tubulaire (2) pourvu d'un premier filet (3) sur une première partie externe (4) de celui-ci et d'un second filet (5) sur une seconde partie interne (6) de celui-ci,
- au moins une bague (7) pourvue d'un filet interne (8) qui est complémentaire dudit premier filet externe (3) dudit élément tubulaire (2), ladite bague (7) permettant son vissage sur ledit premier filet externe (3) dudit élément tubulaire (2),
- au moins une première coque (9) dont la forme et les dimensions sont adaptées pour être complémentaires et dépassent celles de ladite découpe (C) pour son insertion aisée à l'intérieur de ladite conduite principale (A) à travers ladite découpe (C) et son agencement de manière à recouvrir ladite découpe (C), avec une occlusion complète conséquente de ladite découpe (C), avec une bordure périmétrique (10) de celle-ci adaptée pour être en butée contre la surface interne de ladite conduite principale (A) sur le bord (D) de ladite découpe (C), ladite première coque (9) comportant un canal tubulaire incliné (11) pourvu d'un filet externe (12) qui est complémentaire dudit second filet (5) dudit élément tubulaire (2) pour le couplage dudit élément (2) audit canal (11) après un couplage à vis mutuel,
- au moins une seconde coque (13) dont la forme est adaptée pour être sensiblement complémentaire de la forme de la surface externe de ladite conduite (A) et dont les dimensions dépassent les dimensions de ladite découpe (C), ladite seconde coque (13) étant pourvue d'un corps tubulaire incliné (14) adapté pour la réception dudit élément tubulaire (2) et dudit canal (11),
le serrage de ladite bague (7) sur ledit premier filet (3), avec ladite bague (7) en butée contre l'avant terminal dudit corps tubulaire incliné (14) de ladite seconde coque (13), entraînant en utilisation le serrage du bord (D) de ladite découpe (C) entre des bordures périmétriques (10, 15) correspondantes de ladite première coque (9) et de ladite seconde coque (13).

2. Jonction selon la revendication 1, **caractérisée en ce qu'**elle comporte, intercalé entre ladite bordure périmétrique (10) de ladite première coque (9) et la face interne correspondante dudit bord (D) de ladite découpe (C), une garniture d'étanchéité (16) pour étanchéi-fier ladite conduite principale (A) lors de l'installation complète de la dite jonction (1).

3. Jonction selon la revendication 1, **caractérisée en ce que** ladite seconde coque (13) comporte une fente longitudinale (17) et ladite première coque (9) comporte une nervure (18) dont la forme et les dimensions sont complémentaires de ladite fente (17), dans la configuration entièrement installée de ladite nervure (18) reçue à l'intérieur de ladite fente (17).

4. Jonction selon la revendication 3, **caractérisée en ce que** ladite nervure (18) et ladite fente (17) comportent des moyens de couplage mutuel tels que des ensembles de dents (19), des séquences de saillies et d'évidements, des unités élastiques déformables et analogues, afin d'empêcher l'extraction de ladite nervure (18) de ladite fente (17) pendant l'assemblage et l'installation de ladite jonction (1).

5. Jonction selon la revendication 1, **caractérisée en ce qu'**elle comporte au moins un adaptateur (20), qui est intercalé entre ladite seconde coque (13) et la surface externe dudit bord (D) de ladite découpe (C), ledit adaptateur (20) étant pourvu d'une face convexe (21) dont la forme et les dimensions sont complémentaires de celles de la surface concave de ladite seconde coque (13) et avec une face concave (22) dont la forme et les dimensions sont complémentaires de celles de la surface externe de ladite conduite principale (A), le rayon de courbure différent de ladite face concave (22) et de ladite face convexe (21) de chaque adaptateur (20) associé à une dite seconde coque (13) permettant le couplage stable de ladite seconde coque (13) avec des conduites principales (A) ayant divers diamètres différents.

6. Jonction selon la revendication 5, **caractérisée en ce que** ladite seconde coque (13) comporte des moyens de couplage à au moins un adaptateur (20) respectif, lesdits moyens de couplage étant de préférence choisis parmi des vis (23) et des trous (24) pour leur réception, des couplages élastiques et des logements respectifs, des dents et des trous formés correspondants, et analogue.

7. Jonction selon une ou plusieurs des revendications précédentes, **caractérisée en ce que** ledit canal tubulaire (14) et ledit corps tubulaire (2), dans la configuration d'installation complète de ladite jonction, sont coaxiaux et leur axe, qui coïncide sensiblement avec l'axe de ladite conduite secondaire (B), a une inclinaison, par rapport à l'axe de la conduite principale (A), comprise entre 5° et 85°.

8. Jonction selon la revendication 7, **caractérisée en ce que** ledit axe de ladite conduite secondaire (B) et ledit axe de ladite conduite principale (B) sont coplanaires.

9. Jonction selon la revendication 7, **caractérisée en ce que** ledit axe de ladite conduite secondaire (B) et ledit axe de ladite conduite principale (A) sont obliques.

10. Jonction selon une ou plusieurs des revendications précédentes, **caractérisée en ce que** chaque composant choisi parmi ledit élément tubulaire (2), ladite première coque (9), ladite seconde coque (13), ladite bague (7) et lesdits adaptateurs (20) est constitué d'un matériau choisi de préférence parmi un polychlorure de vinyle (PVC), un polypropylène (PP), un polyéthylène (PE), un polyamide (PA), un polyuréthane (PU), un polyté-trafluoroéthylène (PTFE), un polyéthylène térephtalate (PET), un fluoropolymère, un matériau composite renforcé par des fibres de verre, un matériau composite renforcé par des fibres de carbone, un matériau composite renforcé par des fibres de kevlar, un matériau composite renforcé par des fibres polymères, un matériau composite renforcé par des fibres naturelles, et des combinaisons de ceux-ci.
